# FASCICULE DE BREVET EUROPEEN

(11) **EP 0 944 862 B1**
(45) Date de publication et mention de la délivrance du brevet: **28.01.2004**
(21) Numéro de dépôt: 97946010.2
(22) Date de dépôt: 16.12.1997
(51) Int. Cl.: G04C 10/00

(54) **CONVERTISSEUR D'ENERGIE MECANO-ELECTRIQUE ET PIECE D'HORLOGERIE COMPORTANT UN TEL CONVERTISSEUR D'ENERGIE**
UMFORMER VON MECHANISCHER IN ELEKTRISCHE ENERGIE UND ZEITMESSVORRICHTUNG DAMIT
MECHANICAL-ELECTRIC ENERGY CONVERTER AND WATCH PART COMPRISING THIS ENERGY CONVERTER

(30) Priorité: 18.12.1996 CH 310096
(43) Date de publication de la demande: 29.09.1999
(73) Titulaire: PATEK PHILIPPE S.A., 1228 Plan-Les-Ouates (CH)
(72) Inventeur: TU, Mai, Xuan, CH-1024 Ecublens (CH); SCHWAB, Michel, CH-2502 Bienne (CH); MUSY, Jean-Pierre, CH-1268 Begnins (CH)
(74) Mandataire: Micheli & Cie
(86) Numéro de dépôt international: PCT/IB1997/001569
(87) Numéro de publication internationale: WO 1998/027473

(56) Documents cités:
- EP-A- 0 695 978
- DE-A- 3 903 706
- FR-E- 92 782
- US-A- 2 791 732
- US-A- 4 091 302

## Description

La présente invention a pour objet un convertisseur d'énergie mécanique en énergie électrique et les pièces d'horlogerie utilisant ces convertisseurs.

Les appareils électriques portables, ainsi que les pièces d'horlogerie électroniques à quartz utilisent essentiellement, comme source d'énergie, des piles ou des accumulateurs. L'inconvénient majeur de ces derniers réside dans leur durée de vie limitée. Il est de ce fait intéressant de remplacer ces sources d'énergie électriques par une source d'énergie mécanique et un convertisseur d'énergie mécanique en énergie électrique.

Des convertisseurs d'énergie mécanique en énergie électrique sont connus. La demande de brevet européenne 0.665.478 décrit une montre électronique comportant une roue dentée (4) solidaire à une masse oscillante (8). La roue dentée entraîne plusieurs rotors placés à la périphérie d'une platine. Dans la demande de brevet internationale PCT 89/06833, il est décrit une montre électronique comportant une masse oscillante couplée avec le rotor d'une génératrice au travers d'un train d'engrenage multiplicateur de vitesse.

Le brevet DE 3903706 décrit une montre comprenant un mouvement électronique avec un affichage et un générateur entraîné par un moteur à ressort. Enfin, le brevet EP 0695978 décrit un moyen d'indication de l'heure utilisant un ressort comme source d'énergie et comportant un générateur entraîné par le ressort et des moyens électroniques de contrôle actionnés par la force électromotrice du générateur.

Les convertisseurs d'énergie décrits dans les demandes de brevets précitées présentent en commun les inconvénients suivants :
- pour obtenir une vitesse de rotation suffisante du rotor de la génératrice, il faut un rapport multiplicateur de vitesse important, ce qui entraîne une perte de place et une augmentation du coût du convertisseur.
- le grand rapport multiplicateur de vitesse introduit des pertes importantes par frottement, ce qui entraîne une diminution du rendement global du convertisseur.

Le but de la présente invention est de remédier aux inconvénients précités en proposant un nouveau type de convertisseur tel que défini dans la revendication 1.

L'invention sera mieux comprise à la lecture de la description qui va suivre, en se référant aux dessins annexés, dans lesquels :
La figure 1 représente un premier exemple d'exécution du convertisseur selon l'invention.
La figure 2 représente les positions respectives du rotor du générateur de la figure 1 en fonction de celles de la roue dentée;
La figure 3 représente un deuxième exemple d'exécution du convertisseur selon l'invention;
La figure 4 représente un premier exemple d'utilisation du convertisseur selon l'invention;
La figure 5 représente une deuxième forme d'exécution du convertisseur selon l'invention;
La figure 6 représente le frein électromagnétique utilisé dans l'exemple de la figure 5.
La figure 7 représente le dispositif de mesure de la vitesse moyenne de roues de transmission.
La figure 8 illustre une troisième forme d'exécution du convertisseur selon l'invention.

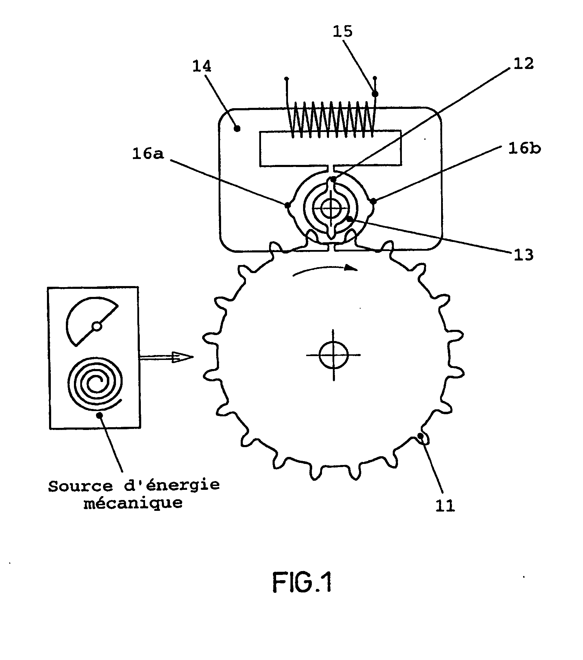

La figure 1 représente un premier exemple d'exécution du convertisseur selon l'invention. Ce convertisseur possède une roue dentée 11 tournant sous l'effet d'une source d'énergie mécanique, soit une masse oscillante, soit un ressort de barillet. La roue dentée 11 entraîne le pignon 12, solidaire du rotor 13, d'un générateur électromagnétique. Ce rotor constitué d'un aimant permanent cylindrique, est logé dans un entrefer de forme pratiquement cylindrique, aménagé dans un stator en matériau ferro-nickel. Le flux créé par le rotor est couplé avec la bobine 15 du générateur. Sur la surface cylindrique de l'enterfer statorique, on crée deux ouvertures semi-circulaires 16a et 16b dans le but de donner au rotor un couple réluctant magnétique.

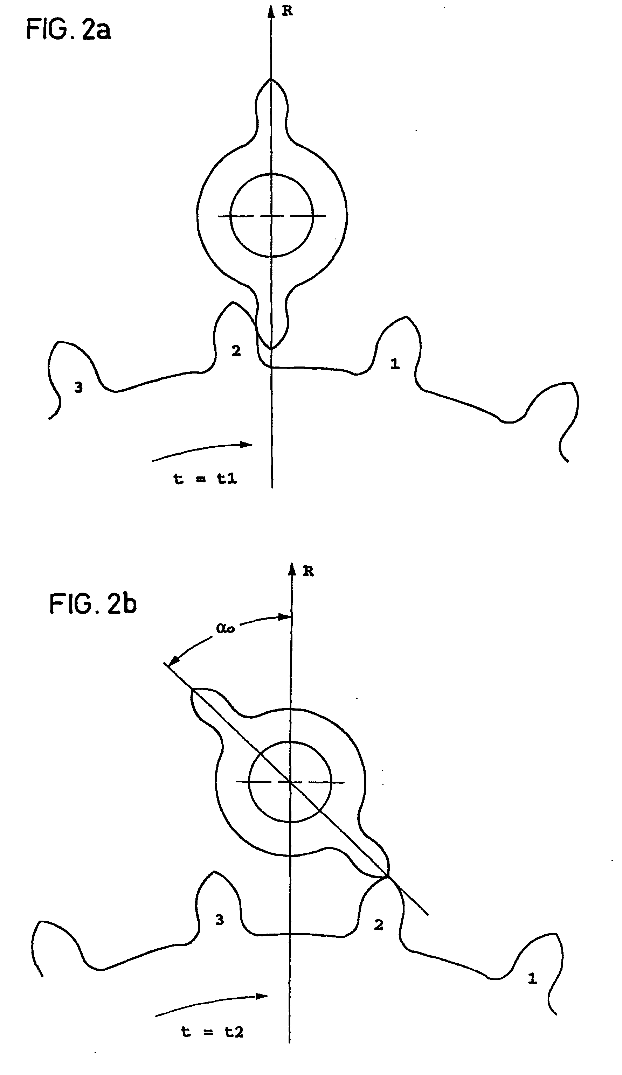

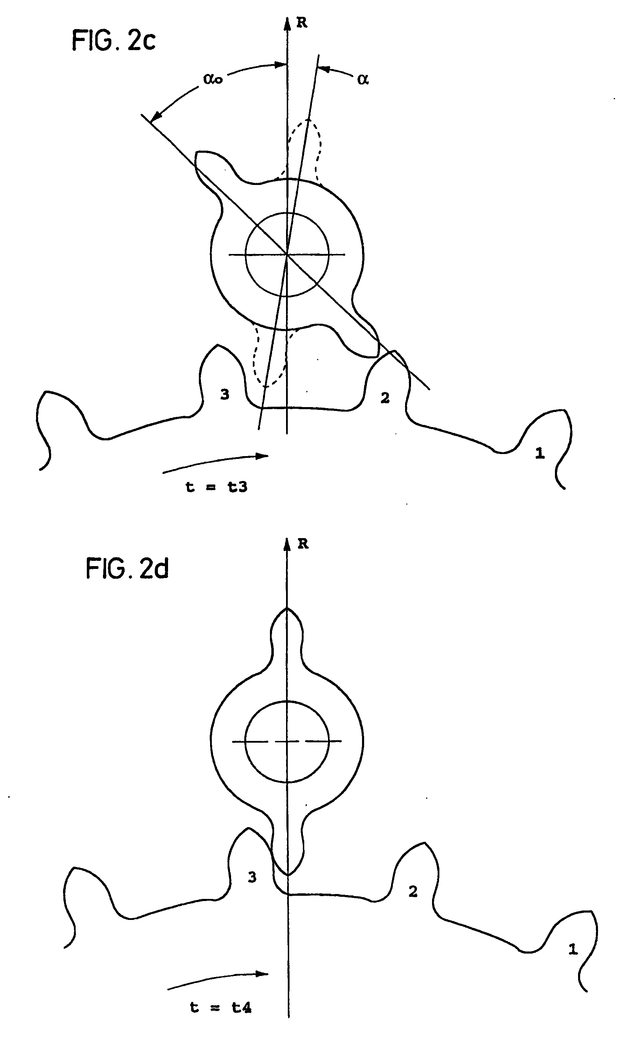

La figure 2 représente les positions respectives du rotor du générateur en fonction de celle de la roue dentée 11. A l'instant t = T1, le pignon du rotor du générateur se trouve entre les dents 1 et 2 de la roue dentée, la dernière n'exerçant aucun couple sur le rotor. Le rotor, sous l'effet du couple réluctant magnétique, se positionne selon l'axe R. A l'instant t = T2, la roue dentée 11, tournant dans le sens de l'aiguille d'une montre, entraîne le pignon du rotor du générateur et l'écarte d'un angle α0 par rapport à sa position initiale. A l'instant t = T3, la dent 2 de la roue dentée n'étant plus en prise avec le pignon du rotor du générateur, le rotor décroche et oscille autour de sa position de repos, c'est-à-dire l'axe R sous l'action du couple réluctant magnétique. Etant donné la très faible inertie du rotor, ce dernier peut atteindre des vitesses angulaires très élevées (vitesse angulaire dépassant 600rad/sec). Le mouvement oscillant à fréquence élevée du rotor permet d'obtenir aux bornes de la bobine 15 du générateur une tension induite de niveau élevé.

L'intérêt de cette conception réside dans le fait que l'énergie électrique fournie par le générateur dépend de la vitesse d'oscilliation du rotor 13 lorsqu'il est libéré du pignon 12. Du fait que pendant ses oscilliations libres du rotor il est dégagé du pignon 12, sa vitesse d'oscilliation n'est fonction que de son inertie et du couple réluctant magnétique. On peut ainsi obtenir de grandes vitesses angulaires d'oscilliation du rotor permettant à son tour la création par induction dans la bobine 15 d'une tension élevée, tension pouvant atteindre plusieurs Volts alors que dans les générateurs actuels une tension d'une fraction de Volts seulement peut être atteinte.

Ainsi, une caractéristique originale du convertisseur d'énergie mécanique en énergie électrique réside dans le fait que la production d'énergie électrique est obtenue lorsque le rotor est libre et non pas lorsqu'il est entraîné mécaniquement par une masse oscilliante ou un barillet comme c'est le cas dans les réalisations antérieures.

Lorsque la bobine 15 du générateur est reliée à une charge, le mouvement oscillant du rotor est rapidement amorti sous l'effet du courant de charge. De ce fait, à l'instant t = T4, on retrouve la même situation du rotor par rapport à la roue dentée 11 qu'à l'instant t = T1.

On voit que le convertisseur mécano-électrique selon l'invention permet d'obtenir une grande vitesse instantanée du rotor du générateur à partir d'une faible vitesse moyenne de la roue dentée et sans train d'engrenage multiplicateur de vitesse. De plus, pendant la conversion mécano-électrique, le générateur n'est soumis qu'à ses propres pertes mécaniques, le rotor étant libre, ce qui permet d'obtenir un rendement global élevé.

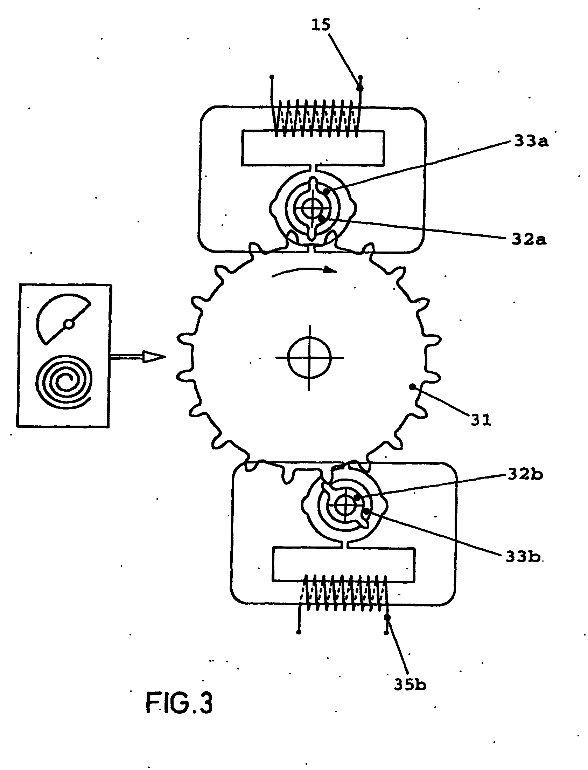

La figure 3 représente un deuxième exemple d'exécution du convertisseur selon l'invention. Dans cette figure, la roue dentée 31 engrène simultanément les rotors 33a et 33b grâce aux pignons 32a, respectivement 32b. Les positions de repos respectives des rotors sont décalées de façon à ce que la variation de couple de réaction total sur la roue 31 soit minimale.

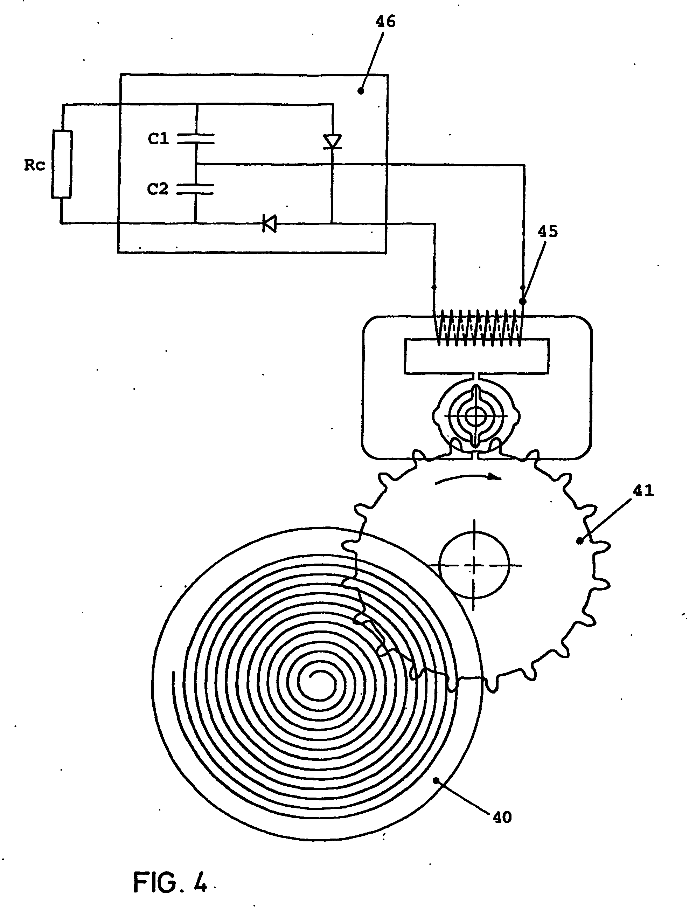

La figure 4 représente un premier exemple d'utilisation du convertisseur selon l'invention. Dans cet exemple, le ressort de barillet 40 fournit l'énergie mécanique au convertisseur à travers la roue de transmission 41; la tension induite aux bornes de la bobine 45 du convertisseur est redressée et multipliée à l'aide du redresseur 46. L'énergie électrique transformée est ensuite stockée dans les capacités C1 et C2. Cette énergie peut être utilisée par un appareil électrique représenté sous forme d'une résistance de charge Rc.

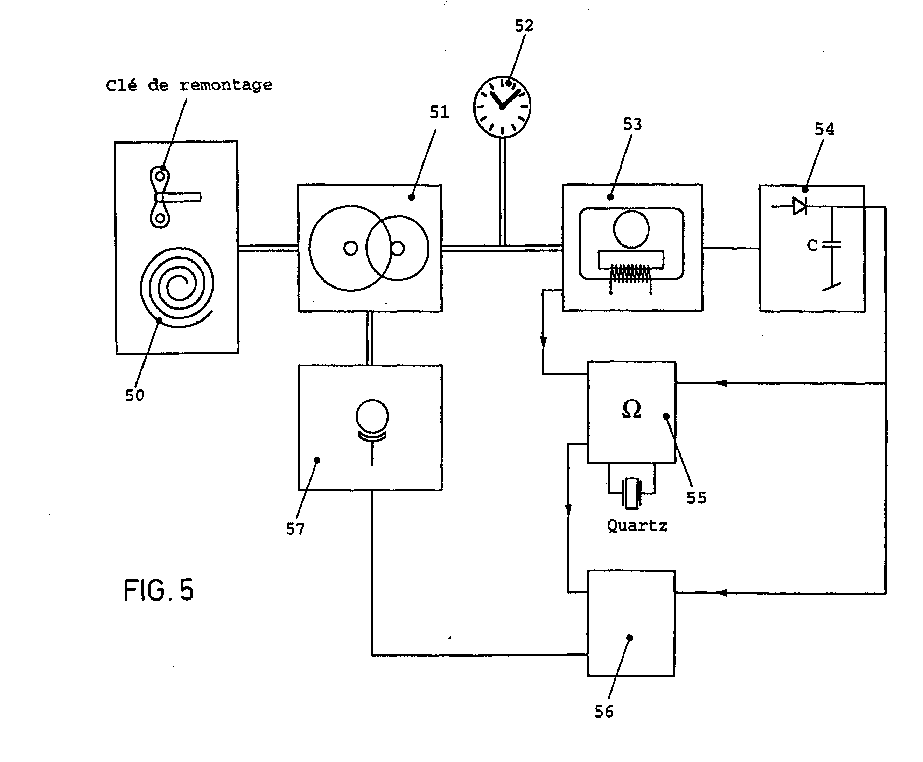

La figure 5 représente un deuxième exemple d'utilisation du convertisseur selon l'invention. Il s'agit dans ce cas d'une pièce d'horlogerie électronique dont la source d'énergie est d'origine mécanique. La source d'énergie 50, composée d'un ressort de barillet, distribue l'énergie mécanique à travers les rouages 51. Des moyens d'affichage 52, formés généralement des aiguilles, sont liés mécaniquement aux rouages 51. Les rouages 51 entraînent également le convertisseur 53, lequel fournit l'énergie électrique au redresseur 54, qui emmagasine cette énergie dans la capacité C. L'énergie emmagasinée sert à alimenter l'organe de commande 56 et les moyens de mesure de vitesse 55. Le frein électromagnétique 57, dont le couple de freinage est réglé par l'organe de commande 56 en fonction de la vitesse moyenne de rotation du rouage permet de réguler cette dernière.

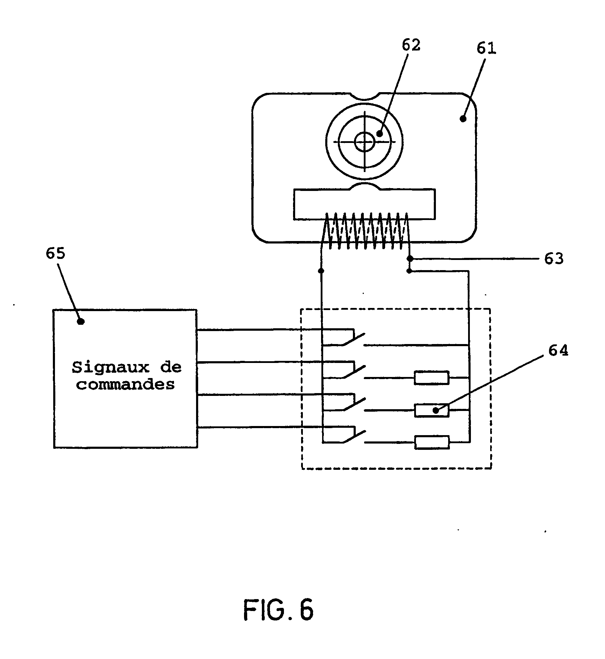

La figure 6 représente un exemple d'exécution du frein électromagnétique. Ce frein est constitué par un circuit magnétique 61 réalisé en matériau ferromagnétique, un rotor 62 en aimant permanent de forme cylindrique, une bobine 63 couplée avec le flux crée par le rotor 62.

les bornes de la bobine 63 sont reliées avec un réseau de résistances de freinage 64. La valeur effective de la résistance de freinage peut être réglée par des interrupteurs commandés par les signaux de commande provenant du bloc 65, ce qui permet de modifier le couple de freinage s'exerçant sur le rotor 62.

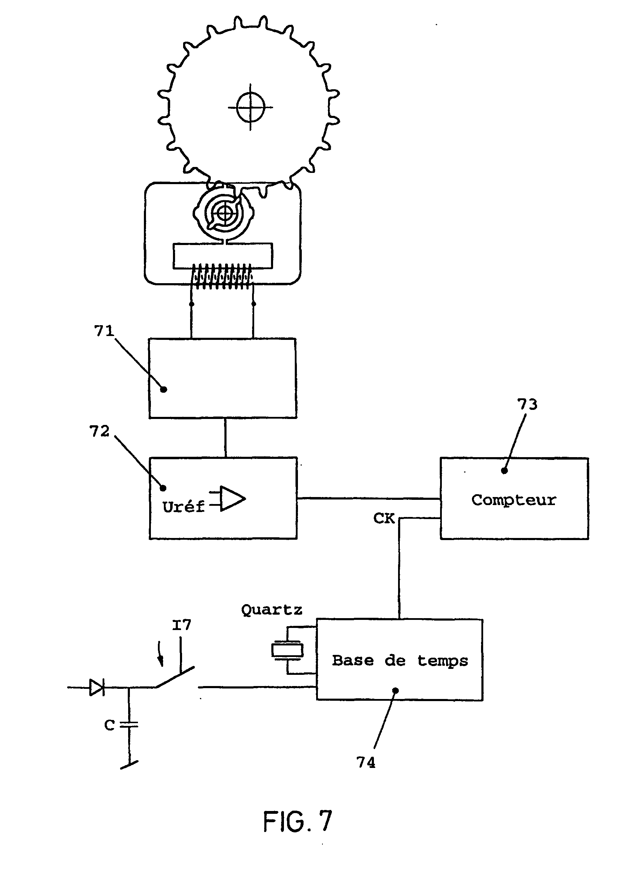

La figure 7 représente un exemple d'exécution du dispositif de mesure de vitesse de rotation moyenne des roues de transmission du convertisseur selon l'invention. Ce dispositif comprend un circuit de mesure 71 de la tension aux bornes du générateur; cette tension, variant fortement lors de chaque décrochement du pignon du rotor du générateur selon les explications relatives aux figures 2a, 2b, 2c, et 2d, est fournie à l'entrée du circuit de comparaison 72 qui la compare avec une tension de référence Uréf. La sortie du circuit 72 délivre un signal logique de niveau 1 ou 0 suivant que la tension mesurée est supérieure à ou inférieure à la tension de référence. Ce signal logique permet au compteur 73 de déterminer la durée entre deux décrochements du pignon de rotor, c'est-à-dire l'inverse de la vitesse angulaire moyenne des roues de transmission, en comptant le nombre d'impulsions d'horloge entre deux passages successifs du signal logique de niveau 0 au niveau 1. La base de temps 74, comprenant un oscillateur à quartz, des circuits de mise en forme et de division, fournit le signal d'horloge CK au compteur 73. Cette base de temps est alimentée en énergie électrique par la capacité C du bloc 54 de la figure 5. Afin d'économiser l'énergie électrique emmagasinée dans la capacité C, la base de temps 74 n'est pas alimentée en permanence mais uniquement pendant la phase de mesure de la vitesse de rotation moyenne, le contrôle de l'alimentation de la base de temps étant assuré par l'interrupteur 17.

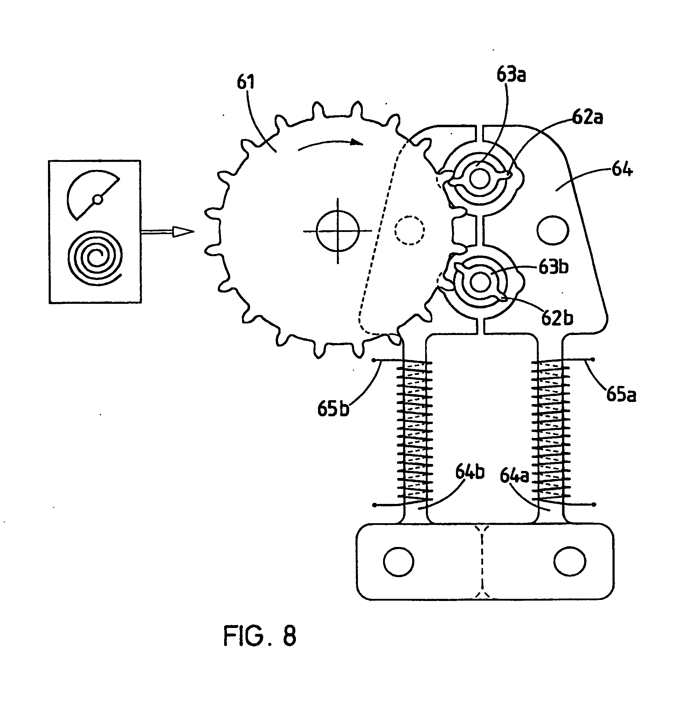

La troisième forme d'exécution du convertisseur illustré à la figure 8 comporte une roue dentée 61 entraînée mécaniquement par un barillet ou une masse excentrée et engrenant avec les pignons 62a,62b de deux rotors 63a,63b logés dans un même stator 64 comprenant deux jambes 64a,64b autour desquels sont enroulées les bobines 65a,65b.

Ici également l'entraînement du rotor 63 par la roue dentée 61 ne se fait pas simultanément, les dents des pignons 62a,62b étant en position de repos disposés parallèlement mais engrenant avc les dents de la roue 61 pour des positions angulaires différentes de cette roue.

## Revendications

1. Convertisseur d'énergie mécano-électrique comprenant des moyens de transmission d'énergie mécanique, composé d' au moins une roue dentée (11), des moyens de transformation d'énergie mécanique en énergie électrique, composés d' au moins un générateur électromagnétique présentant au moins un rotor (13) entraîné par lesdits moyens de transmission d'énergie mécanique, **caractérisé par le fait que** chaque rotor (13) de chaque générateur électromagnétique possède un couple de positionnement qui détermine sa position d'équilibre au repos en l'absence des couples externes, **par le fait que** l'entraînement du ou des rotors (13) par les moyens de transmission d'énergie mécanique n'est actif que sur un angle limité α0 du rotor (13), de façon à ce que le ou les rotors (13) ne puissent pas tourner d'un tour complet, mais oscillent autour de leur position d'équilibre au repos.

2. Convertisseur d'énergie selon la revendication 1, **caractérisé par** le f ait qu'il comprend des moyens (46) pour redresser et pour multiplier la tension du générateur et des moyens (C) pour stocker l'énergie électrique produite par le générateur.

3. Convertisseur d'énergie selon la revendication 1 ou selon la revendication 2, **caractérisé par le fait que** le générateur est constitué d'un rotor (13) en aimant permanent, d'un circuit magnétique (14) en matériau magnétique doux et une bobine (15) couplée avec le flux créé par l'aimant du rotor (13).

4. Convertisseur selon l'une des revendications 1 à 3, **caractérisé par le fait que** l'entraînement du rotor (13) par les moyens de transmission d'énergie mécanique (11) est intermittant, ces moyens de transmission entraînant le rotor hors de sa position de repos; et **par le fait que** dès que la liaison mécanique d'entraînement du rotor (13) est interrompue, celui-ci revient à sa position de repos en oscilliant autour de celle-ci à grande vitesse sous l'action du couple réluctant magnétique du convertisseur.

5. Convertisseur selon la revendication 4, **caractérisé par le fait que** la production d'énergie électrique est obtenue lors des oscilliations libres du rotor (13).

6. Convertisseur selon la revendication 5, **caractérisé par le fait que** la roue dentée (11) engrène avec un pignon à deux dents (12) solidaires de chaque rotor (13).

7. Convertisseur selon la revendication 5, **caractérisé par le fait qu'**il comporte deux génératrices dont les rotors (33a, 33b) sont entraînés par la même roue dentée (31).

8. Convertisseur selon la revendication 5 ou la revendication 6, **caractérisé par le fait que** chaque génératrice comporte plusieurs rotors (33) engrenant avec la même roue dentée (31).

9. Appareil électrique comportant un convertisseur d'énergie selon les revendications 1 à 8.

10. Appareil électrique selon la revendication 9 constitué par une pièce d' horlogerie comprenant un ressort de barillet (50) couplé avec les moyens de transmission d'énergie (51) mécanique du convertisseur, des moyens pour fournir une base de temps, des moyens de mesure de la vitesse (55) de rotation moyenne des roues de transmission d'énergie mécanique, des moyens de régulation (57) de la vitesse de rotation moyenne des roues de transmission, des moyens d'affichage de la vitesse moyenne des roues de transmission, **caractérisé par le fait que** lesdits moyens de régulation de la vitesse moyenne de rotation sont constitués par un frein électromagnétique (57) dont le couple de freinage moyen est réglé par un organe de commande (56) en fonction d' une vitesse de consigne.

11. Appareil électrique selon la revendication 9 ou la revendication 10, le frein électromagnétique étant constitué par un rotor en aimant permanent, un circuit magnétique en matériau magnétique doux et une bobine couplée avec le flux créé par l'aimant de rotor, **caractérisé par le fait que** le couple de freinage moyen est réglé par un organe de commande en fonction d'une vitesse de consigne en reliant les bornes de la bobine du frein à une résistance dont la valeur est variable.

12. Appareil électrique selon la revendication 9 ou la revendication 10, **caractérisé en ce que** les moyens de mesure de la vitesse (55) de rotation moyenne des roues de transmission comprennent un circuit de mesure (71) de la tension aux bornes du générateur, un circuit de comparaison (72) entre la tension mesurée et une tension de référence (U_{réf}) fournissant un signal logique de niveau 1 à sa sortie lorsque la tension mesurée dépasse la tension de référence et un signal logique de niveau 0 dans le cas contraire, un circuit de comptage (73) permettant de déterminer la durée entre deux passages successifs du signal logique de niveau 0 au niveau 1.

13. Appareil électrique selon la revendication 12, ledit circuit de comptage (73) comprenant une base de temps (74), comprenant un oscillateur à quartz et des circuits de mise en forme et de division, **caractérisé par le fait que** la base de temps (74) n'est pas active en permanence mais uniquement pendant la phase de mesure de la vitesse de rotation moyenne des roues de transmission d'énergie.

## Claims

1. A mechanical-to-electrical energy converter comprising both mechanical energy transmission means composed of at least one toothed wheel (11), and means for transforming mechanical energy into electrical energy, said means being composed of at least one electromagnetic generator presenting at least one rotor (13) driven by said mechanical energy transmission means, the converter being **characterized by** the fact that each electromagnetic generator rotor (13) possesses a positioning torque which determines its equilibrium position at rest in the absence of any external torque, and by the fact that the drive of the rotor(s) by the mechanical energy transmission means is active over only a limited angle α₀ of the rotor(13), so that the rotor(s) cannot turn through a complete turn but oscillate about their equilibrium position at rest.

2. An energy converter according to claim 1, **characterized by** the fact that it includes means (46) for rectifying and multiplying the voltage from the generator, and means (C) for storing the electrical energy produced by the generator.

3. An energy converter according to claim 1 or claim 2, **characterized by** the fact that the generator is constituted by a permanent magnet rotor (13), a magnetic circuit (14) made of a soft magnetic material, and a coil (15) coupled with the flux created by the magnet of the rotor (13).

4. A converter according to any one of claims 1 to 3, **characterized by** the fact that the rotor (13) is driven by the mechanical energy transmission means (11) in intermittent manner, the transmission means entraining the rotor away from its rest position; and by the fact that as soon as the driving mechanical connection of the rotor (13) is interrupted, the rotor returns at high speed under the action of the reluctant magnetic torque of the converter.

5. A converter according to claim 4, **characterized by** the fact that the production of electrical energy occurs during free oscillations of the rotor (13).

6. A converter according to claim 5, **characterized by** the fact that, for each rotor (13), the toothed wheel (11) meshes with a gearwheel having two teeth (12) and secured to the rotor (13).

7. A converter according to claim 5, **characterized by** the fact that it includes two generators having rotors (33a, 33b) driven by the same toothed wheel (31).

8. A converter according to claim 5 or claim 6, **characterized by** the fact that each generator includes a plurality of rotors (33) meshing with the same toothed wheel (31).

9. An electrical appliance including an energy converter according to claims 1 to 8.

10. An electrical appliance according to claim 9, constituted by a piece of clock or watch work including a barrel spring (50) coupled with the mechanical energy transmission means (51) of the converter, means for providing a time base, means (55) for measuring the mean speed of rotation of the mechanical energy transmission wheels, means (57) for regulating the mean speed of rotation of the transmission wheels, and means for displaying the mean speed of the transmission wheels, the appliance being **characterized by** the fact that said means for regulating the mean speed of rotation are constituted by an electromagnetic brake (57) whose mean braking torque is controlled by a control member (56) as a function of a reference speed.

11. An electrical appliance according to claim 9 or claim 10, the electromagnetic brake being constituted by a permanent magnet rotor, a magnetic circuit made of soft magnetic material, and a coil coupled with the flux created by the magnet of the rotor, the appliance being **characterized by** the fact that the mean braking torque is controlled by a control member as a function of a reference speed by connecting the terminals of the brake coil to a variable resistance.

12. An electrical appliance according to claim 9 or claim 10, **characterized in that** the means (55) for measuring the mean speed of rotation of the transmission wheels comprises a circuit (71) for measuring the voltage across the terminals of the generator, a circuit (72) for comparing the measured voltage with a reference voltage (Uréf) and supplying a logic level 1 signal at its output when the measured voltage exceeds the reference voltage and otherwise a logic level 0 signal, and a counter circuit (73) for determining the duration that elapses between two successive changeovers of the logic signal from level 0 to level 1.

13. An electrical appliance according to claim 12, said counter circuit (83) comprising a time base (84) comprising a crystal oscillator and shaping and divider circuits, the appliance being **characterized by** the fact that the time base (84) is not continuously active, but is active only while measuring the mean speed of rotation of the energy transmission wheels.

## Patentansprüche

1. Umformer von mechanischer in elektrische Energie mit einem Übertragungsorgan für mechanische Energie, bestehend aus zumindest einem Zahnrad (11), aus einem Organ für die Umformung von mechanischer Energie in elektrische Energie, das aus zumindest einem elektromagnetischen Generator zusammengesetzt ist, der zumindest einen Rotor (13) aufweist, der durch dieses Übertragungsorgan für mechanische Energie angetrieben wird, **dadurch gekennzeichnet, dass** jeder Rotor (13) jedes elektromagnetischen Generators ein Positioniermoment besitzt, das seine Gleichgewichts-Ruhelage in Abwesenheit äusserer Momente bestimmt, dadurch, dass der Antrieb des oder der Rotoren (13) durch das Übertragungsorgan für mechanische Energie nur über einen begrenzten Winkel á0 des Rotors (13) aktiv ist, so dass der oder die Rotoren (13) keine ganze Umdrehung ausführen können, sondern um ihre Gleichgewichts-Ruhelage oszillieren.

2. Energieumformer nach Anspruch 1, **dadurch gekennzeichnet, dass** er Mittel (46) für die Gleichrichtung und Vervielfachung der Spannung des Generators sowie Mittel (C) für die Speicherung der durch den Generator erzeugten elektrischen Energie enthält.

3. Energieumformer nach Anspruch 1 oder nach Anspruch 2, **dadurch gekennzeichnet, dass** der Generator aus einem Rotor (13) mit Permanentmagneten, einem magnetischen Kreis (14) aus weichmagnetischem Material und einer mit dem durch den Magneten des Rotors (13) erzeugten Fluss gekoppelten Spule (15) besteht.

4. Umformer nach einem der Ansprüche 1 bis 3, **dadurch gekennzeichnet, dass** der Antrieb des Rotors (13) durch das Übertragungsorgan für mechanische Energie (11) diskontinuierlich ist, wobei dieses Übertragungsorgan den Rotor aus seiner Ruhelage herausführt; und dadurch, dass der Rotor (13), sobald seine mechanische Antriebsverbindung unterbrochen ist, in seine Ruhelage zurückkehrt, während er unter der Einwirkung des Reluktanzmoments des Umformers mit hoher Geschwindigkeit um diese Lage herum oszilliert.

5. Umformer nach Anspruch 4, **dadurch gekennzeichnet, dass** die Erzeugung elektrischer Energie während der freien Oszillationen des Rotors (13) erfolgt.

6. Umformer nach Anspruch 5, **dadurch gekennzeichnet, dass** das Zahnrad (11) mit einem Antriebsrad mit zwei Zähnen (12) in Eingriff kommt, die fest mit jedem Rotor (13) verbunden sind.

7. Umformer nach Anspruch 5, **dadurch gekennzeichnet, dass** er zwei Generatoren enthält, deren Rotoren (33a, b) durch das gleiche Zahnrad (31) angetrieben werden.

8. Umformer nach Anspruch 5 oder Anspruch 6, **dadurch gekennzeichnet, dass** jeder Generator mehrere Rotoren (33) umfasst, die mit dem gleichen Zahnrad (31) in Eingriff kommen.

9. Elektrogerät mit einem Energieumformer nach Ansprüchen 1 bis 8.

10. Elektrogerät nach Anspruch 9, aus einer Uhr bestehend, die eine Zugfeder (50) enthält, die mit dem Übertragungsorgan für mechanische Energie (51) des Umformers gekoppelt ist, ferner Mittel, um eine Zeitbasis zur Verfügung zu stellen, Mittel (55), um die mittlere Drehgeschwindigkeit der Räder für die Übertragung der mechanischen Energie zu messen, Mittel (57), um die mittlere Drehgeschwindigkeit der Übertragungsräder zu regulieren, Mittel, um die mittlere Geschwindigkeit der Übertragungsräder anzuzeigen, **dadurch gekennzeichnet, dass** diese Mittel zur Regulierung der mittleren Drehgeschwindigkeit aus einer elektromagnetischen Bremse (57) bestehen, deren Bremsmoment durch ein Steuerorgan (56) in Abhängigkeit von einer Sollgeschwindigkeit geregelt wird.

11. Elektrogerät nach Anspruch 9 oder Anspruch 10, worin die elektromagnetische Bremse aus einem Rotor mit Permanentmagneten, einem magnetischen Kreis aus weichmagnetischem Material und einer mit dem durch den Magneten des Rotors erzeugten Fluss gekoppelten Spule besteht, **dadurch gekennzeichnet, dass** das mittlere Bremsmoment durch ein Steuerorgan in Abhängigkeit von einer Sollgeschwindigkeit reguliert wird, indem die Anschlussklemmen der Bremsspule mit einem Widerstand verbunden werden, dessen Grösse variiert werden kann.

12. Elektrogerät nach Anspruch 9 oder Anspruch 10, **dadurch gekennzeichnet, dass** das Organ (55) für die Messung der mittleren Drehgeschwindigkeit der Übertragungsräder einen Messkreis (71) für die Spannung an den Klemmen des Generators, einen Schaltkreis (72) für den Vergleich der gemessenen Spannung mit einer Bezugsspannung (Uref), der ein logisches Signal des Niveaus 1, wenn die gemessene Spannung die Bezugsspannung übersteigt, und im umgekehrten Falle ein logisches Signal des Niveaus 0 an seinem Ausgang liefert, sowie einen Zählkreis (73) umfasst, der es ermöglicht, die Zeit zwischen zwei aufeinanderfolgenden Übergängen des logischen Signals vom Niveau 0 zum Niveau 1 zu bestimmen.

13. Elektrogerät nach Anspruch 12, worin dieser Zählkreis (73) eine Zeitbasis (74) enthält, die aus einem Quarzoszillator, einer Impulsschaltung und einer Teilerschaltung besteht, **dadurch gekennzeichnet, dass** die Zeitbasis (74) nicht dauernd, sondern nur während der Phase der Messung der mittleren Drehgeschwindigkeit der Energieübertragungsräder aktv ist.
